# EUROPEAN PATENT SPECIFICATION

(11) **EP 4 099 070 B1**
(45) Date of publication and mention of the grant of the patent: **18.06.2025**
(21) Application number: 22158792.6
(22) Date of filing: 25.02.2022
(51) Int. Cl.: G02B 6/42

(54) **THERMAL INTERFACE STRUCTURES FOR OPTICAL COMMUNICATION DEVICES**
THERMISCHE SCHNITTSTELLENSTRUKTUREN FÜR OPTISCHE KOMMUNIKATIONSVORRICHTUNGEN
STRUCTURES D'INTERFACE THERMIQUE POUR DISPOSITIFS DE COMMUNICATION OPTIQUE

(30) Priority: 04.06.2021 US 202117338928
(43) Date of publication of application: 07.12.2022
(73) Proprietor: INTEL Corporation, Santa Clara, CA 95054 (US)
(72) Inventor: Chiu, Chia-Pin, Tempe 85284 (US); Hosseini, Kaveh, San Jose 95134 (US); Tran, Thu Ngoc, Chandler 85226 (US); Kok, Yew Fatt, Newark 94560 (US); Singh, Kumar Abhishek, Phoenix 85048 (US); Li, Xiaoqian, Chandler 85248 (US); Tejeda Ferrari, Marely, Tempe 85283 (US); Mahajan, Ravindranath, Chandler 85248 (US); Ma, Kevin, Beaverton 97006 (US); Thielen, Casey, Chandler 85225 (US)
(74) Representative: Goddar, Heinz J.

(56) References cited:
- WO-A1-96/33441
- WO-A2-2007/103880
- JP-A- 2020 134 599
- US-A1- 2002 018 636
- US-A1- 2014 348 462

## Description

### GOVERNMENT INTEREST STATEMENT

This invention was made with government support from the United States Government under Agreement No. HR0011-19-3-0003, awarded by the Defense Advanced Research Projects Agency (DARPA). The Government has certain rights in the invention.

### TECHNICAL FIELD

Embodiments of the present description generally relate to the field of integrated circuit assemblies and, more particularly, to the integration of thermal interface structures for the removal of heat from optical communication devices.

### BACKGROUND

The integrated circuit industry is continually striving to produce ever faster and smaller integrated circuit devices for use in various server and mobile electronic products, including, but not limited to, computer server products and portable products, such as wearable integrated circuit systems, portable computers, electronic tablets, cellular phones, digital cameras, and the like.

As these goals are achieved, the integrated circuit devices become smaller. However, communication demands have been increasing considerably faster than scaling (e.g., Moore's law) can achieve. For example, machine intelligence systems are requiring core counts in the thousands, "near compute" memory of greater than 10 gigabytes, connectivity bandwidth of greater than one terabyte per second between multiple nodes, low latency, thermal control, and good manufacturability, as will be understood to those skilled in the art. Of course, signal loss significantly increases with metal conductive routes (used for electrical interconnects) as signaling frequency increases and distance between the integrated circuit devices increases. Furthermore, the routing of the conductive routes becomes increasingly complex as more integrated circuit devices are added to an integrated circuit package. Thus, optical interconnects are being used to replace electrical interconnects, as optical interconnects offer very high bandwidths compared to electrical interconnects. As will be understood to those skilled in the art, photonic integrated circuit devices are used to convert electrical signals to optical signals. As will be further understood, photonic integrated circuit devices may have lasing components, amplifiers, and/or other electrical circuits which generate significant power densities (e.g., about 50 to 150 watts per square millimeter compared to a processing or computing device which may have power densities of about 5 to 50 watts per square millimeter, depending on use condition). Furthermore, optical components, such as lasers, can typically only tolerate a maximum temperature of between about 70 and 90 degrees Celsius compared to the maximum junction temperatures on processing or computing devices of between about 100 to 110 degrees Celsius.

Ordinarily, heat is removed with a heat dissipation device, such as an integrated heat spreader, a heat sink, a heat pipe, a thermoelectric cooler, a cold plate, and the like, thermally attached with thermal interface materials to the integrated circuit devices within the integrated may be greases, gels, pads, films, and the like, with a high loading of thermally conductive filler materials, such as metal and/or ceramic particles. However, such thermal interface materials may not be compatible with photonic integrated circuit devices. For example, with silicon photonic integrated circuit devices, particularly those with thin buried oxide layers, the silicon substrate, from which the device is made, must be thinned in order to remove silicon in areas where optical waveguides are located to ensure that the optical beam stays in the waveguide and does not couple with the silicon substrate, as will be understood to those skilled in the art. As previously discussed, the silicon photonic integrated circuit devices need to be thermally coupled to the heat dissipation device in order to maintain an acceptable operating temperature. The required thinning of the silicon photonic integrated circuit devices will bring the thermal interface materials into close proximity with the waveguides of the silicon photonic integrated circuit devices. However, the thermally conductive fillers in the thermal interface materials will absorb, scatter, and/or couple the light from the waveguides, resulting in significant waveguide insertion loss and sometimes even "optical blindness" where no light comes out of the waveguide at all. Although, one could limit the contact area of the thermal interface material and the silicon photonic integrated circuit device, such as at a periphery thereof, this will constrain the heat flow path and result in lower cooling efficiency. Thus, cooling photonic integrated circuit devices is a significant challenge.
US2014348462 A1 describes an optical circuit board including a top face, a bottom face, an optical layer buried between bottom and top faces, the optical layer being adapted to transmit optical signals, an opto-electronic component adapted to emit or receive light transmitted through the optical layer, a solid heat dissipative element adapted to dissipate heat generated at the opto-electronic component.
WO9633441 A1 describes an asymmetric thermo-optical device comprising a waveguiding structure which comprises at least one input light path and a first output light path and a second output light path, the second output light path having a smaller width than the first output light path, and the first output light path being provided with a first heating element, wherein the second output light path is provided with a second heating element. In a preferred embodiment of the invention the second heating element is connected to a capacitor which is connected in parallel with the first heating element.
WO2007103880 A2 describes a tunable optical waveguide chip for optical transforms. Roughly described, the chip includes a planar waveguide having a lens region and a plurality of individually addressable energy applicators distributed transversely across an optical path through the lens region. By individually controlling the energy applied to each of the energy applicators, a desired index of refraction profile can be induced in the lens region transversely across the optical path for performing any of a variety of optical transforms. The device may include an upstream AWG which focus a wavelength de-multiplexed signal on a focal plane within the lens region. The applicators may be thermo-optic or electro-optic, for example.
US2002018636 A1 describes a device for variable attenuation of an optical channel which includes an elongated core surrounded by a cladding. Optical energy propagating along the longitudinal axis of the core is normally confined thereto by the difference in refractive indices between the core and cladding. The thermo-optic coefficients of the core and cladding are closely matched such that waveguide confinement is substantially invariant with respect to ambient temperature. The device further includes a thermal source arranged above the core. The thermal source is operable to generate a temperature gradient of controllable magnitude along a vertical axis extending through the core. The temperature gradient causes reduction of the local refractive index within the core relative to surrounding regions of the cladding such that a portion of the optical energy is deflected away from the thermal source and extracted from the core.
JP2020134599 A describes an optical semiconductor element which comprises a substrate, an optical waveguide structure including an optical waveguiding layer and a cladding part formed above the substrate; a heater thermally connected to the optical waveguide structure; conductor wiring electrically connected to the heater; and an electrode pad electrically connected to the conductor wiring. The conductor wiring has a small structure such that a portion positioned in the vicinity of the heater has a cross sectional area smaller than a cross sectional area of a portion positioned close to the electrode pad.
US 2003/223697 A1 describes an apparatus comprising a photonic integrated circuit device, a thermal interface material and a heat dissipation device. The invention is set forth in independent claim 1. Embodiments of the invention described in the dependent claims.

### BRIEF DESCRIPTION OF THE DRAWINGS

The subject matter of the present disclosure is particularly pointed out and distinctly claimed in the concluding portion of the specification. The foregoing and other features of the present disclosure will become more fully apparent from the following description and appended claims, taken in conjunction with the accompanying drawings, the invention being defined by the claims. It is understood that the accompanying drawings depict only several embodiments in accordance with the present disclosure and are, therefore, not to be considered limiting of its scope. The disclosure will be described with additional specificity and detail through use of the accompanying drawings, such that the advantages of the present disclosure can be more readily ascertained, in which:
FIG. 1 is an oblique view of an integrated circuit package, according to an embodiment of the present description.
FIG. 2 is an oblique view of the integrated circuit package of FIG. 1 having a heat dissipation device thermally coupled thereto, according to an embodiment of the present description.
FIGs. 3-5 are side cross-sectional views of electronic assemblies including a heat dissipation device thermally coupled to a photonic integrated circuit device with a thermal interface structure, according to embodiments of the present description.
FIG. 6 is a side cross-sectional view of a thermal interface structure attached to a heat dissipation structure, according to an embodiment of the present description.
FIG. 7 is a side cross-sectional view of a thermal interface structure, according to one embodiment of the present description.
FIG. 8 is a side cross-sectional view of a silicon photonic integrated circuit device with a cladding material layer disposed thereon, according to an embodiment of the present description.
FIG. 9 is an electronic system, according to one embodiment of the present description.

### DETAILED DESCRIPTION

In the following detailed description, reference is made to the accompanying drawings that show, by way of illustration, specific embodiments in which the claimed subject matter may be practiced. These embodiments are described in sufficient detail to enable those skilled in the art to practice the subject matter. It is to be understood that the various embodiments, although different, are not necessarily mutually exclusive. For example, a particular feature, structure, or characteristic described herein, in connection with one embodiment, may be implemented within other embodiments without departing from the scope of the claimed subject matter. References within this specification to "one embodiment" or "an embodiment" mean that a particular feature, structure, or characteristic described in connection with the embodiment is included in at least one implementation encompassed within the present description. Therefore, the use of the phrase "one embodiment" or "in an embodiment" does not necessarily refer to the same embodiment. In addition, it is to be understood that the location or arrangement of individual elements within each disclosed embodiment may be modified without departing from the spirit and scope of the claimed subject matter. The following detailed description is, therefore, not to be taken in a limiting sense, and the scope of the subject matter is defined only by the appended claims, appropriately interpreted, along with the full range of equivalents to which the appended claims are entitled. In the drawings, like numerals refer to the same or similar elements or functionality throughout the several views, and that elements depicted therein are not necessarily to scale with one another, rather individual elements may be enlarged or reduced in order to more easily comprehend the elements in the context of the present description.

The terms "over", "to", "between" and "on" as used herein may refer to a relative position of one layer with respect to other layers. One layer "over" or "on" another layer or bonded "to" another layer may be directly in contact with the other layer or may have one or more intervening layers. One layer "between" layers may be directly in contact with the layers or may have one or more intervening layers.

The term "package" generally refers to a self-contained carrier of one or more dice, where the dice are attached to the package substrate, and may be encapsulated for protection, with integrated or wire-bonded interconnects between the dice and leads, pins or bumps located on the external portions of the package substrate. The package may contain a single die, or multiple dice, providing a specific function. The package is usually mounted on a printed circuit board for interconnection with other packaged integrated circuits and discrete components, forming a larger circuit.

Here, the term "cored" generally refers to a substrate of an integrated circuit package built upon a board, card or wafer comprising a non-flexible stiff material. Typically, a small printed circuit board is used as a core, upon which integrated circuit device and discrete passive components may be soldered. Typically, the core has vias extending from one side to the other, allowing circuitry on one side of the core to be coupled directly to circuitry on the opposite side of the core. The core may also serve as a platform for building up layers of conductors and dielectric materials.

Here, the term "coreless" generally refers to a substrate of an integrated circuit package having no core. The lack of a core allows for higher-density package architectures, as the through-vias have relatively large dimensions and pitch compared to high-density interconnects.

Here, the term "land side", if used herein, generally refers to the side of the substrate of the integrated circuit package closest to the plane of attachment to a printed circuit board, motherboard, or other package. This is in contrast to the term "die side", which is the side of the substrate of the integrated circuit package to which the die or dice are attached.

Here, the term "dielectric" generally refers to any number of non-electrically conductive materials that make up the structure of a package substrate. For purposes of this disclosure, dielectric material may be incorporated into an integrated circuit package as layers of laminate film or as a resin molded over integrated circuit dice mounted on the substrate.

Here, the term "metallization" generally refers to metal layers formed over and through the dielectric material of the package substrate. The metal layers are generally patterned to form metal structures such as traces and bond pads. The metallization of a package substrate may be confined to a single layer or in multiple layers separated by layers of dielectric.

Here, the term "bond pad" generally refers to metallization structures that terminate integrated traces and vias in integrated circuit packages and dies. The term "solder pad" may be occasionally substituted for "bond pad" and carries the same meaning.

Here, the term "solder bump" generally refers to a solder layer formed on a bond pad. The solder layer typically has a round shape, hence the term "solder bump".

Here, the term "substrate" generally refers to a planar platform comprising dielectric and metallization structures. The substrate mechanically supports and electrically couples one or more IC dies on a single platform, with encapsulation of the one or more IC dies by a moldable dielectric material. The substrate generally comprises solder bumps as bonding interconnects on both sides. One side of the substrate, generally referred to as the "die side", comprises solder bumps for chip or die bonding. The opposite side of the substrate, generally referred to as the "land side", comprises solder bumps for bonding the package to a printed circuit board.

Here, the term "assembly" generally refers to a grouping of parts into a single functional unit. The parts may be separate and are mechanically assembled into a functional unit, where the parts may be removable. In another instance, the parts may be permanently bonded together. In some instances, the parts are integrated together.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, magnetic or fluidic connection between the things that are connected or an indirect connection, through one or more passive or active intermediary devices.

The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The vertical orientation is in the z-direction and it is understood that recitations of "top", "bottom", "above" and "below" refer to relative positions in the z-dimension with the usual meaning. However, it is understood that embodiments are not necessarily limited to the orientations or configurations illustrated in the figure.

The terms "substantially," "close," "approximately," "near," and "about," generally refer to being within +/- 10% of a target value (unless specifically specified). Unless otherwise specified the use of the ordinal adjectives "first," "second," and "third," etc., to describe a common object, merely indicate that different instances of like objects to which are being referred and are not intended to imply that the objects so described must be in a given sequence, either temporally, spatially, in ranking or in any other manner.

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

Views labeled "cross-sectional", "profile" and "plan" correspond to orthogonal planes within a cartesian coordinate system. Thus, cross-sectional and profile views are taken in the x-z plane, and plan views are taken in the x-y plane. Typically, profile views in the x-z plane are cross-sectional views. Where appropriate, drawings are labeled with axes to indicate the orientation of the figure.

Embodiments of the present description relate to the removal of heat from a silicon photonic integrated circuit device, wherein the removal of heat is facilitated with an optically compatible thermal interface structure thereon. The thermal interface structures may comprise stack-up designs, including an optical isolation structure and a thermal interface material, which reduces light coupling effects, while effectively conducting heat from the silicon photonic integrated circuit device to a heat dissipation device, thereby allowing effective management of the temperature thereof.

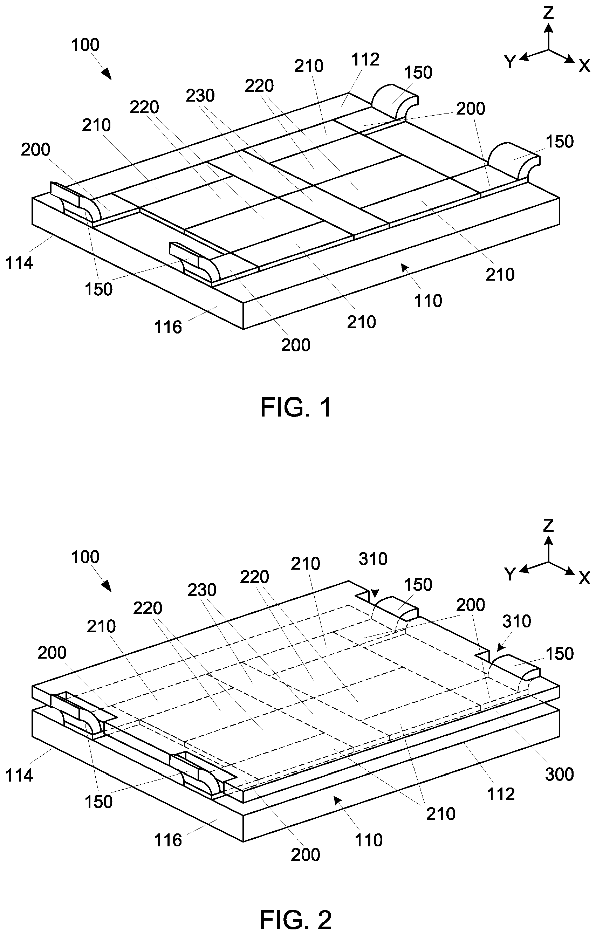

FIG. 1 illustrates an electronic assembly 100, such as an integrated circuit package. The electronic assembly 100 may include at least one silicon photonic integrated circuit device 200 electrically attached to a package substrate 110, wherein each silicon photonic integrated circuit device 200 may have an optical communication cable 150, such as an optic fiber cable, attached thereto. The package substrate 110 may be any appropriate structure, including, but not limited to, an interposer. The package substrate 110 may have a first surface 112, an opposing second surface 114, and at least one side 116 extending between the first surface 112 and the second surface 114. As illustrated, the silicon photonic integrated circuit devices 200 may be attached proximate the side(s) 116 of the package substrate 110 to allow for easier attachment access for the optical communication cable 150.

As further shown in FIG. 1, a plurality of additional integrated circuit devices 210, 220, and 230 may also be electrically attached to the package substrate 110. Each of the additional integrated circuit devices 210, 220, and 230 may be any appropriate device, including, but not limited to, a microprocessor, a chipset, a graphics device, a wireless device, a memory device, an application specific integrated circuit, a transceiver device, an input/output device, combinations thereof, stacks thereof, or the like. In a specific embodiment, integrated circuit device(s) 210 may be input/output control hubs (such as electronic integrated chips), integrated circuit device(s) 220 may be processing units, and integrated circuit device(s) 230 may be cache memory devices.

In one embodiment of the present description, at least one of the integrated circuit devices 200, 210, 220, and 230 may be electrically attached to the package substrate 110 in a configuration generally known as a flip-chip or controlled collapse chip connection ("C4") configuration. In another embodiment of the present description (not shown), the silicon photonic integrated circuit devices 200 may be electrically attached to the package substrate 110 in an "open cavity" configuration, wherein the silicon photonic integrated circuit devices 200 are at least partially embedded in the package substrate 110 that allows for direct attachment of the silicon photonic integrated circuit devices 200 to electronic integrated chips 210 (a controller for the silicon photonic integrated circuit devices 200) for better power efficiency and allows for less obstructed access to the silicon photonic integrated circuit device for the attachment of the optical communication cables 150.

The package substrate 110 may comprise a plurality of dielectric material layers (not shown), which may include build-up films and/or solder resist layers, and may be composed of an appropriate dielectric material, including, but not limited to, bismaleimide triazine resin, fire retardant grade 4 material, polyimide material, silica filled epoxy material, glass reinforced epoxy material, low temperature co-fired ceramic materials, and the like, as well as low-k and ultra low-k dielectrics (dielectric constants less than about 3.6), including, but not limited to, carbon doped dielectrics, fluorine doped dielectrics, porous dielectrics, organic polymeric dielectrics, fluoropolymers, and the like.

The package substrate 110 may further include conductive routes or "metallization" (not shown) extending through the package substrate 110 for the interconnection of the integrated circuit devices 200, 210, 220, and 230 and/or for the interconnection of the package substrate 110 to an external board (not shown). These conductive routes (not shown) may be a combination of conductive traces (not shown) formed between the dielectric material layers (not shown) and conductive vias (not shown) extending through the dielectric material layers (not shown). The structure and fabrication of conductive traces and conductive vias are well known in the art and are not shown or described for purposes of clarity and conciseness. The conductive traces and the conductive vias may be made of any appropriate electrically conductive material, including, but not limited to, metals, such as copper, silver, nickel, gold, and aluminum, alloys thereof, and the like. As will be understood to those skilled in the art, the package substrate 110 may be a cored substrate or a coreless substrate.

As shown in FIG. 2, the package substrate 110 may include a heat dissipation device 300 disposed thereon, wherein the heat dissipation device 300 may be thermally coupled to the integrated circuit devices 200, 210, 220, and 230 with one or more thermal interface materials (not shown). As previously discussed, the thermal interface materials for the "non-photonic" integrated circuit devices, such as integrated circuit devices 210, 220, and 230, may be thermally coupled to the heat dissipation device 300 with standard thermal interface materials with a high loading of thermally conductive filler materials, such as metal and/or ceramic particles. However, as also previously discussed, such thermal interface materials may not be compatible with the silicon photonic integrated circuit devices 200. The embodiments of the present description are directed to thermal interface structures for these photonic integrated circuit devices 200.

The heat dissipation device 300 may comprise any appropriate thermally conductive structure, including but not limited to an integrated heat spreader, a heat sink, a heat pipe, a thermoelectric cooler, a cold plate, and the like, and may be made of any appropriate thermally conductive material, including, but not limited to, metals, such as copper, silver, nickel, gold, and aluminum, alloys thereof, and the like. In one embodiment of the present description, the heat dissipation device 300 may include a cut-out window or notch therein to allow for a less obstructed access to the silicon photonic integrated circuit device for the attachment of the optical communication cables 150.

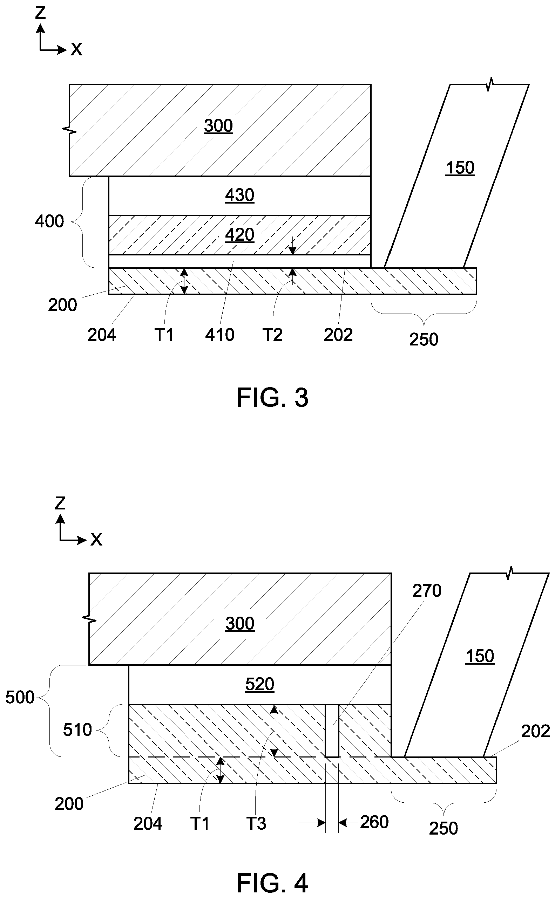

FIGs. 3-8 illustrate side cross-sectional views of embodiments of the present description. It is noted that various processes and techniques for the electrical attachment of a photonic integrated circuit device to a package substrate is well known in the art and, thus, for the sake of clarity and conciseness will not be discussed nor will the package substrate be illustrated.

As shown in FIG. 3, the silicon photonic integrated circuit device 200 may be formed having a first surface 202 and an opposing second surface 204. As will be understood to those skilled in the art, the first surface 202 may contain active circuitry (not shown), active structures (not shown), communication structures (not shown - such as waveguides, grating couplers, and the like), interconnection structures (not shown - such as bond pads, and structures (not shown - e.g., sockets, clips, plugs and the like) for connection of the optical communication cable 150. In one embodiment of the present description, the entire silicon photonic integrated circuit device 200 may be thinned, such as by etching, to a thickness T1 of between about 10 and 20 microns. A thermal interface structure 400 may then be formed on the silicon photonic integrated circuit device 200. The thermal interface structure 400 may comprise an optical isolation structure, such as a light insulating die attach film 410, a silicon heat spreader 420, and a thermal interface material layer 430. The light insulating die attach film 410 may be formed abutting the first surface 202 of the silicon photonic integrated circuit device 200. The light insulating die attach film 410 may be any appropriate adhesive which does not significantly absorb, scatter, and/or couple light (photons) from the communication structures on the first surface 202. In one embodiment, the light insulating die attach film 410 may include, but is not limited to, silicones, acrylates, epoxies, rubbers, fused silicas, acrylics, and the like. The light insulating die attach film 410 includes silica filler particles. When the refraction index of the light insulating die attach film 410 substantially matches the refraction index of the silica filler particles, the light insulating die attach film 410 is substantially optically transparent.

In one embodiment of the present description, the light insulating die attach film 410 may have a thickness T2 of between about 5 and 20 microns, but not limited thereto. The rule of thumb is that the minimum thickness T2 needs to be at least two times larger than the mode field diameter of communication structures on the first surface 202 in order to effectively insulate light. As will be understood to those skilled in the art, the maximum thickness T2 of the light insulation die attach film 410 will depend on desired parameter goals. For example, as the thermal conductivity of die attach films are typically relatively low (e.g., between about 0.2 and 0.4 watts per meter*Kelvin), a thinner film closer to 5 microns may result in a lower thermal resistance and may be preferred in most cases for more efficient heat removal. However, in order to accommodate larger packages and potential warpage, a thicker film of closer to 20 microns may be chosen to accommodate such warpage.

The silicon heat spreader 420 may contact the light insulating die attach film 410 to adhere it to the silicon photonic integrated circuit device 200 for improved heat removal. As the light insulating die attach film 410 optically isolates the first surface 202 of the silicon photonic integrated circuit device 200, the silicon heat spreader 420 will not cause light absorption, scattering, and/or coupling. Furthermore, the silicon heat spreader 420 will have substantially the same coefficient of thermal expansion as the silicon photonic integrated circuit device 200 to minimize thermally induced mechanical stresses that could damage components of the silicon photonic integrated circuit device 200.

The thermal interface material layer 430 may be disposed between the silicon heat spreader 420 and the heat dissipation device 300 for thermal coupling therebetween. As the thermal interface material layer 430 is between the silicon heat spreader 420 and the heat dissipation device 300, and does not contact the silicon photonic integrated circuit device, the thermal interface material layer 430 may be any appropriate thermally conductive material, filled or unfilled.

As will be understood, before the assembly of the electronic assembly 100 (see FIG. 2), the light insulative die attach film 410 may be pre-attached to the silicon heat spreader 420 for easier handling. As will be further understood, the thermal interface material layer 430 may be pre-attached to heat dissipation device 300 to eliminate a step of pick and place.

As shown in FIG. 4, in one embodiment of the present description, a thermal interface structure 500 may comprise an optical isolation structure, such as an air gap 270 formed in a silicon plateau 510 of the silicon photonic integrated circuit device 200, and a thermal interface material, such as a compliant thermal interface pad 520. In an embodiment of the present description, the silicon photonic integrated circuit device 200 may be thinned by selective etching to form the first surface 202, such that the at least one silicon plateau 510 extends from the first surface 202. The selective etching forms the air gap 270 within the silicon plateau 510 in at least one area 260 where at least one waveguide is formed, and removes silicon in at least one area 250 where a grating coupler is formed (i.e., area for the attachment of the optical communication cable 150), which results in the formation of the at least one silicon plateau 510. In one embodiment of the present description, the silicon plateau 510 may have a thickness T3 of between about 100 and 200 microns for heat spreading. The air gap 270 in at least one area 260 (where at least one waveguide is formed) prevents light absorption, scattering, and/or coupling, as will be understood to those skilled in the art.

In an embodiment of the present description, the compliant thermal interface pad 520 may be disposed between the silicon plateau 510 of the silicon photonic integrated circuit device 200 and the heat dissipation device 300. In one embodiment, the compliant thermal interface pad 520 is sufficiently conformable, resilient, and/or deformable is to reduce loading stress from the heat dissipation device 300 to the silicon photonic integrated circuit device 200, which may damage components within the silicon photonic integrated circuit device 200 or even crack the silicon photonic integrated circuit device 200 itself. Furthermore, in an embodiment of the present description, the compliant thermal interface pad 520 may be sufficiently rigid to prevent it from extending too far into the air gap 270 over the waveguide area 260. It is understood that the compliant thermal interface pad 520 may partially extend into the air gap 270, as long as there is a distance of two times the "mode field diameter (MFD)" between the first surface 202 over the waveguide area 260 and the thermal interface pad 520. In one embodiment, the compliant thermal interface pad 520 may include, but is not limited to, gap filler material (such as silicone rubber carrier material containing thermally conductive ceramic filler particles), thermally conductive elastomer, vertical carbon thermal interface material, and the like.

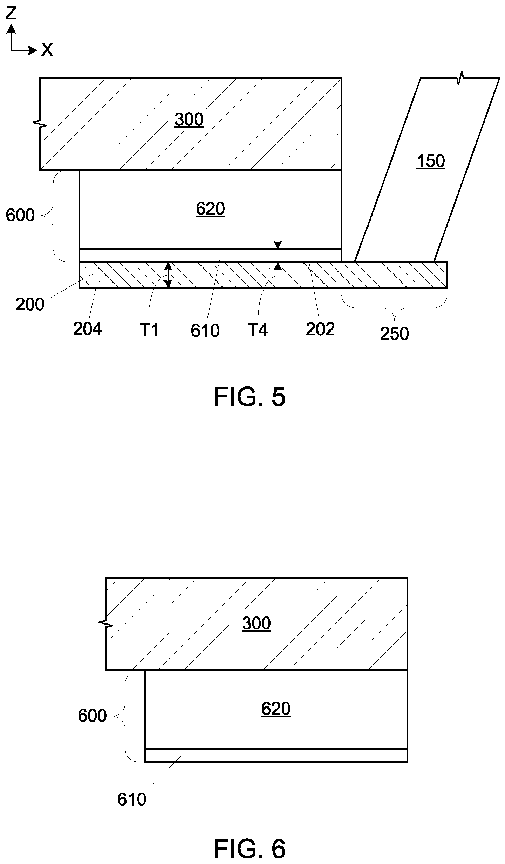

In an embodiment of the present description, as shown in FIG. 5, a thermal interface structure 600 may be formed between the silicon photonic integrated circuit device 200 and the heat dissipation device 300. The thermal interface structure 600 may comprise an optical isolation structure, such as a cladding material layer 610, and a thermal interface material layer, such as a thermal interface tape 620. The cladding material layer 610 may be formed abutting the first surface 202 of the silicon photonic integrated circuit device 200. The cladding material layer 610 may be any appropriate material which does not significantly absorb, scatter, and/or couple light (photons). The cladding material layer 610 includes silicones, acrylates, epoxies or acrylics. In one embodiment of the present description, the cladding material layer 610 may be substantially transparent. In another embodiment of the present description, the cladding material layer 610 may have a refraction index between about 1.3 and 1.5. In a further embodiment of the present description, the cladding material layer 610 may have a thickness T4 of between about 2 and 3 times the mode field diameter of connection structures, such as waveguides, within the silicon photonic integrated circuit device 200.

In one embodiment of the present description, the thermal interface tape 620 may include, but is not limited to, gap filler material (such as silicone rubber carrier material containing thermally conductive ceramic filler particles), thermally conductive elastomer, vertical carbon thermal interface material, and the like. In another embodiment of the present description, the thermal interface tape 620 can be replaced by thermal grease or a polymer thermal interface material.

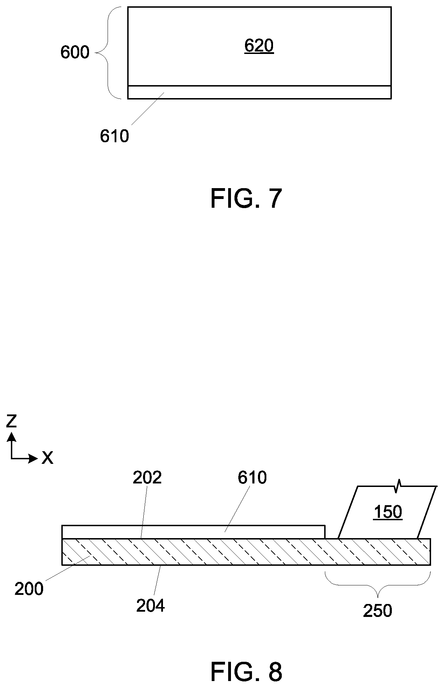

As will be understood, the thermal interface structure 600 may be pre-attached to the heat dissipation device 300 for easier handling, as shown in FIG. 6. As will be further understood, the thermal interface structure, i.e., the combination of the cladding material layer 610 and the thermal interface tape 620 may be supplied as a stand-alone product, as shown in FIG. 7. As will be further understood, the cladding material layer 610 may be pre-attached to the silicon photonic integrated circuit device 200, as shown in FIG. 8.

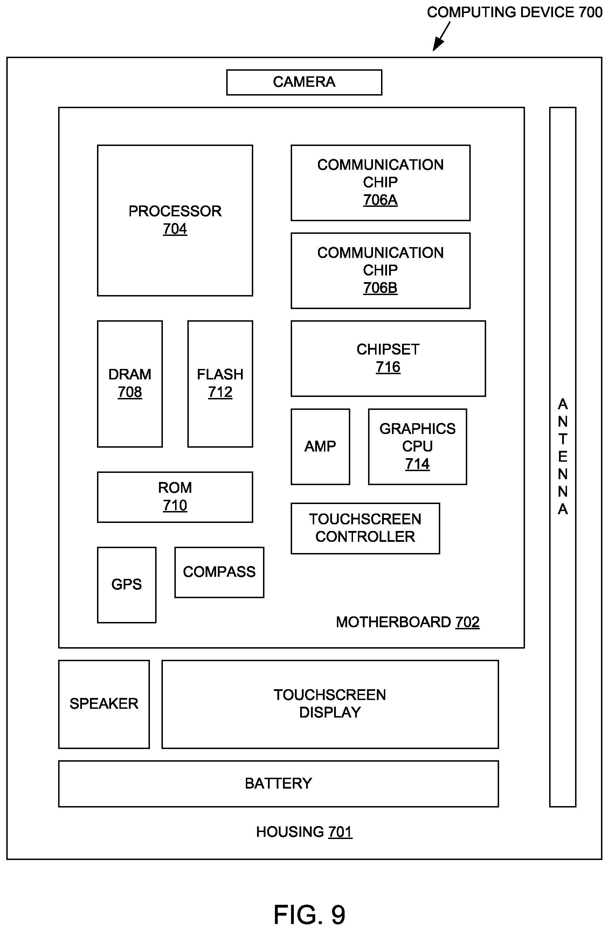

FIG. 9 illustrates an electronic or computing device 700 in accordance with one implementation of the present description. The computing device 700 may include a housing 701 having a board 702 disposed therein. The computing device 700 may include a number of integrated circuit components, including but not limited to a processor 704, at least one communication chip 706A, 706B, volatile memory 708 (e.g., DRAM), non-volatile memory 710 (e.g., ROM), flash memory 712, a graphics processor or CPU 714, a digital signal processor (not shown), a crypto processor (not shown), a chipset 716, an antenna, a display (touchscreen display), a touchscreen controller, a battery, an audio codec (not shown), a video codec (not shown), a power amplifier (AMP), a global positioning system (GPS) device, a compass, an accelerometer (not shown), a gyroscope (not shown), a speaker, a camera, and a mass storage device (not shown) (such as hard disk drive, compact disk (CD), digital versatile disk (DVD), and so forth). Any of the integrated circuit components may be physically and electrically coupled to the board 702. In some implementations, at least one of the integrated circuit components may be a part of the processor 704.

The communication chip enables wireless communications for the transfer of data to and from the computing device. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device may include a plurality of communication chips. For instance, a first communication chip may be dedicated to shorter range wireless communications such as Wi-Fi and Bluetooth and a second communication chip may be dedicated to longer range wireless communications such as GPS, EDGE, GPRS, CDMA, WiMAX, LTE, Ev-DO, and others.

The term "processor" may refer to any device or portion of a device that processes electronic data from registers and/or memory to transform that electronic data into other electronic data that may be stored in registers and/or memory.

At least one of the integrated circuit components may include an integrated circuit package, which comprises a package substrate, wherein the package substrate includes a first surface; a heat dissipation structure within the package substrate; and a photonic integrated circuit device, wherein the silicon photonic integrated circuit device is attached adjacent to the first surface of the package substrate and thermally coupled to the heat dissipation structure.

In various implementations, the computing device may be a laptop, a netbook, a notebook, an ultrabook, a smartphone, a tablet, a personal digital assistant (PDA), an ultra-mobile PC, a mobile phone, a desktop computer, a server, a printer, a scanner, a monitor, a set-top box, an entertainment control unit, a digital camera, a portable music player, or a digital video recorder. In further implementations, the computing device may be any other electronic device that processes data.

It is understood that the subject matter of the present description is not necessarily limited to specific applications illustrated in FIGs. 1-9. The subject matter may be applied to other integrated circuit devices and assembly applications, as well as any appropriate electronic application, as will be understood to those skilled in the art.

Having thus described in detail embodiments of the present invention, it is understood that the invention defined by the appended claims is not to be limited by particular details set forth in the above description, as many apparent variations thereof are possible without departing from the scope of the invention as defined by the claims.

## Claims

1. An apparatus, comprising:
a photonic integrated circuit device (200), wherein the photonic integrated circuit device (200) has a first surface;
an optical isolation structure proximate the first surface of the photonic integrated circuit device (200);
a thermal interface material (430) on the optical isolation structure; and
a heat dissipation device (300), wherein the heat dissipation device (300) is thermally coupled to the thermal interface material (430), **characterized in that**
the optical isolation structure comprises a light insulating die attach film **(410)** selected from the group consisting of silicones, acrylates, epoxies, rubbers, fused silicas, and acrylics, or a cladding material layer selected form the group consisting of silicones, acrylates, epoxies, and acrylics, **in that**
the light insulating die attach film (410) comprises silica filler particles and has a refraction index substantially matching the refraction index of the silica filler particles, or **in that**
the optical isolation structure comprises an air gap formed in the photonic integrated circuit device (200).

2. The apparatus of claim 1, wherein the light insulation die attach film (410) contains no filler materials.

3. The apparatus of any of claims 1 or 2, further comprising a heat spreader (420) between the light insulation die attach film (410) and the thermal interface material (430).

4. The apparatus of claim 1, wherein the air gap is formed in a plateau formed in the photonic integrated circuit device (200).

5. The apparatus of any of claims 1 to 4, wherein the thermal interface material (430) comprises a compliant thermal interface pad that is selected from the group consisting of gap filler material, thermally conductive elastomer, and vertical carbon thermal interface material (430).

6. The apparatus of claim 5, wherein the thermal interface material (430) comprises a thermal interface tape selected from the group consisting of gap filler material, thermally conductive elastomer, and vertical carbon thermal interface material (430).

7. The apparatus of any of claims 1 to 6, further comprising:
a package substrate (110), wherein the package substrate (110) includes a first surface, wherein the photonic integrated circuit device (200) is electrically attached to the package substrate (110).

8. The apparatus of claim 7, further comprising:
an electronic board, wherein the integrated circuit package is electrically attached to the electronic board.

## Patentansprüche

1. Einrichtung, umfassend:
eine photonische integrierte Schaltungsvorrichtung (200), wobei die photonische integrierte Schaltungsvorrichtung (200) eine erste Oberfläche aufweist;
eine optische Isolationsstruktur nahe der ersten Oberfläche der photonischen integrierten Schaltungsvorrichtung (200);
ein thermisches Schnittstellenmaterial (430) auf der optischen Isolationsstruktur; und
eine Wärmeableitungsvorrichtung (300), wobei die Wärmeableitungsvorrichtung (300) thermisch mit dem thermischen Schnittstellenmaterial (430) gekoppelt ist, **dadurch gekennzeichnet, dass**
die optische Isolationsstruktur einen lichtisolierenden Die-Befestigungsfilm (410) ausgewählt aus der Gruppe bestehend aus Silikonen, Acrylaten, Epoxiden, Kautschuken, Quarzgläsern und Acrylverbindungen oder eine Hüllmaterialschicht ausgewählt aus der Gruppe, bestehend aus Silikonen, Acrylaten, Epoxiden und Acrylverbindungen umfasst, dass
der lichtisolierende Die-Befestigungsfilm (410) Siliciumdioxidfüllstoffpartikel umfasst und einen Brechungsindex aufweist, der im Wesentlichen dem Brechungsindex der Siliciumdioxidfüllstoffpartikel entspricht, oder dass
die optische Isolationsstruktur einen Luftspalt umfasst, der in der photonischen integrierten Schaltungsvorrichtung (200) gebildet ist.

2. Einrichtung nach Anspruch 1, wobei der lichtisolierende Die-Befestigungsfilm (410) keine Füllstoffmaterialien enthält.

3. Einrichtung nach einem der Ansprüche 1 oder 2, ferner umfassend einen Wärmeverteiler (420) zwischen dem lichtisolierenden Die-Befestigungsfilm (410) und dem thermischen Schnittstellenmaterial (430).

4. Einrichtung nach Anspruch 1, wobei der Luftspalt in einem Plateau gebildet ist, das in der photonischen integrierten Schaltungsvorrichtung (200) gebildet ist.

5. Einrichtung nach einem der Ansprüche 1 bis 4, wobei das thermische Schnittstellenmaterial (430) ein nachgiebiges thermisches Schnittstellenpad umfasst, das ausgewählt ist aus der Gruppe bestehend aus Spaltfüllstoffmaterial, wärmeleitfähigem Elastomer und thermischem Schnittstellenmaterial aus vertikalem Kohlenstoff (430).

6. Einrichtung nach Anspruch 5, wobei das thermische Schnittstellenmaterial (430) ein thermisches Schnittstellenband ausgewählt aus der Gruppe bestehend aus Spaltfüllstoffmaterial, wärmeleitfähigem Elastomer und thermischem Schnittstellenmaterial aus vertikalem Kohlenstoff (430) umfasst.

7. Einrichtung nach einem der Ansprüche 1 bis 6, ferner umfassend:
ein Gehäusesubstrat (110), wobei das Gehäusesubstrat (110) eine erste Oberfläche aufweisen, wobei die photonische integrierte Schaltungsvorrichtung (200) elektrisch an dem Gehäusesubstrat (110) angebracht ist.

8. Einrichtung nach Anspruch 7, ferner umfassend:
eine elektronische Platine, wobei das integrierte Schaltungsgehäuse elektrisch an der elektronischen Platine angebracht ist.

## Revendications

1. Appareil, comprenant :
un dispositif à circuit intégré photonique (200), le dispositif à circuit intégré photonique (200) ayant une première surface ;
une structure d'isolation optique à proximité de la première surface du dispositif à circuit intégré photonique (200) ;
un matériau d'interface thermique (430) sur la structure d'isolation optique ; et
un dispositif de dissipation thermique (300), le dispositif de dissipation thermique (300) étant couplé thermiquement au matériau d'interface thermique (430), **caractérisé en ce que**
la structure d'isolation optique comprend un film de fixation de matrice d'isolation contre la lumière (410) choisi dans le groupe constitué de silicones, d'acrylates, d'époxies, de caoutchoucs, de silices fondues et d'acryliques, ou une couche de matériau de revêtement choisie dans le groupe constitué de silicones, d'acrylates, d'époxies et d'acryliques, **en ce que**
le film de fixation de matrice d'isolation contre la lumière (410) comprend des particules de charge de silice et a un indice de réfraction correspondant sensiblement à l'indice de réfraction des particules de charge de silice, ou **en ce que**
la structure **d'isolation** optique comprend un entrefer formé dans le dispositif à circuit intégré photonique (200).

2. Appareil selon la revendication 1, le film de fixation de matrice d'isolation contre la lumière (410) ne contenant aucun matériau de remplissage.

3. Appareil selon l'une quelconque des revendications 1 ou 2, comprenant en outre un répartiteur de chaleur (420) entre le film de fixation de matrice d'isolation contre la lumière (410) et le matériau d'interface thermique (430).

4. Appareil selon la revendication 1, l'entrefer étant formé dans un plateau formé dans le dispositif à circuit intégré photonique (200).

5. Appareil selon l'une quelconque des revendications 1 à 4, le matériau d'interface thermique (430) comprenant un tampon d'interface thermique conforme qui est choisi dans le groupe constitué de matériau de remplissage d'espace, d'élastomère thermiquement conducteur et de matériau d'interface thermique en carbone vertical (430).

6. Appareil selon la revendication 5, le matériau d'interface thermique (430) comprenant une bande d'interface thermique choisie dans le groupe constitué de matériau de remplissage d'espace, d'élastomère thermiquement conducteur et de matériau d'interface thermique en carbone vertical (430).

7. Appareil selon l'une quelconque des revendications 1 à 6, comprenant en outre :
un substrat d'emballage (110), le substrat d'emballage (110) comprenant une première surface, le dispositif à circuit intégré photonique (200) étant électriquement fixé au substrat d'emballage (110).

8. Appareil selon la revendication 7, comprenant en outre :
une carte électronique, le boîtier de circuit intégré étant fixé électriquement à la carte électronique.
